(19)

(11) **EP 4 372 425 B1**

(12) **FASCICULE DE BREVET EUROPEEN**

(45) Date de publication et mention de la délivrance du brevet:
**18.02.2026 Bulletin 2026/08**

(21) Numéro de dépôt: **23210442.2**

(22) Date de dépôt: **16.11.2023**

(51) Classification Internationale des Brevets (IPC):
***G01T 1/02*** *(2006.01)* ***G01T 1/06*** *(2006.01)*

(52) Classification Coopérative des Brevets (CPC):
**G01T 1/02; G01T 1/06**

(54) **DOSIMÈTRE À FIBRE OPTIQUE POUR ENVIRONNEMENT SPATIAL ET PROCÉDÉ DE DOSIMÉTRIE**

FASEROPTISCHES DOSIMETER FÜR RÄUMLICHE UMGEBUNG UND DOSIMETRIEVERFAHREN

FIBER OPTIC DOSIMETER FOR SPATIAL ENVIRONMENT AND DOSIMETRY METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.11.2022 FR 2212028**

(43) Date de publication de la demande:
**22.05.2024 Bulletin 2024/21**

(73) Titulaires:
- **EXAIL**
  **78100 Saint-Germain-en-Laye (FR)**
- **Centre National d'Etudes Spatiales**
  **75001 Paris (FR)**
- **Centre National de la Recherche Scientifique**
  **75016 Paris (FR)**
- **Université Jean Monnet Saint-Étienne**
  **42023 Saint-Étienne Cedex 2 (FR)**

(72) Inventeurs:
- **CHEINEY, Pierrick**
  **78100 Saint-Germain-en-Laye (FR)**
- **ROBIN, Thierry**
  **78100 Saint-Germain-en-Laye (FR)**
- **MELIN, Gilles**
  **78100 Saint-Germain-en-Laye (FR)**
- **BALCON, Nicolas**
  **31401 Toulouse Cedex 9 (FR)**
- **MEKKI, Julien**
  **31401 Toulouse Cedex 9 (FR)**
- **GIRARD, Sylvain**
  **42000 Saint-Étienne (FR)**

(74) Mandataire: **Jacobacci Coralis Harle**
**32, rue de l'Arcade**
**75008 Paris (FR)**

(56) Documents cités:
**EP-B1- 2 591 387** **WO-A2-01/82426**
**WO-A2-2008/054339** **CN-B- 111 505 695**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente invention concerne le domaine technique des appareils, dispositifs et procédés de dosimétrie pour mesurer des doses d'irradiation, exprimées en Gray (1 Gy= 1 J/kg), en particulier dans un environnement mixte comprenant des ions, protons, électrons, neutrons et/ou photons.

Plus précisément, la présente invention concerne un dosimètre ponctuel pour fournir une mesure de dose d'irradiation de grande précision en temps réel. L'invention concerne aussi un dosimètre pour fournir une mesure de dose totale ionisante (TID) sur une large gamme dynamique et/ou sur une longue durée.

En particulier, un tel appareil, dispositif et procédé de dosimétrie trouve des applications dans le domaine spatial, dans tout type d'environnement radiatif spatial, ou encore dans le domaine médical, scientifique en physique des hautes énergies, comme capteur de référence pour d'autres dosimètres, ou dans le domaine nucléaire.

### Technique antérieure

Il est important de pouvoir réaliser une dosimétrie dans tout type d'environnement radiatif spatial, c'est-à-dire sur tout type de plateforme et sur toutes les orbites. En effet, les vols habités, les missions en surface de la lune ou de planètes, les sondes spatiales, les échantillons prélevés lors de missions spatiales ou encore les vols en ballons stratosphériques sont exposés à différents environnements radiatifs, appelés environnements radiatifs spatiaux. Par exemple, il est important de pouvoir mesurer la dose d'irradiation reçue par un astronaute dans une station spatiale à chaque instant et de façon cumulée sur toute la durée d'une mission. La dosimétrie, résolue en temps, peut aussi permettre la détection d'éruptions solaires ou encore le contrôle des neutrons reçus lors d'une mission extravéhiculaire, lunaire ou sur une planète.

Il existe différents types de dosimètres ponctuels passifs ou actifs. On connaît des dosimètres passifs à base de matériaux thermo-luminescents, stimulables optiquement ou par des mesures de concentration de défauts par résonance paramagnétique électronique. Ces dosimètres passifs sont lus après irradiation mais ne permettent pas une mesure de dose précise en temps réel. Il existe aussi des dosimètres actifs par exemple à base de composants microélectroniques.

Il est aussi connu d'utiliser un dosimètre à fibre optique basé sur une mesure d'atténuation induite par irradiation (ou RIA pour « Radiation Induced Attenuation » en anglais) aussi appelée mesure des pertes induites par irradiation pour différents types de radiations : ions, protons, électrons, neutrons et/ou photons. En particulier, il est connu d'utiliser un dosimètre comprenant une fibre optique radiosensible, une source lumineuse et un photodétecteur pour mesurer, en fonction du temps, les pertes de puissance optique du faisceau lumineux transmis à travers la fibre optique pour en déduire, grâce à une pré-calibration, l'atténuation induite par irradiation dans la fibre optique. Une fibre optique est rendue radiosensible par un dopage du cœur et/ou de la gaine optique, par exemple au phosphore, ce qui rend la fibre optique sensible aux rayonnements ionisants.

Certains dosimètres basés sur la mesure de RIA dans une fibre optique permettent d'atteindre une sensibilité élevée à de faibles doses d'irradiation, par exemple avec une sensibilité l'ordre de 1 $dB.km^{-1}.Gy^{-1}$ et une précision de 20%. Toutefois, la RIA dépend en général de la température et du débit de dose et diminue significativement après la fin de l'exposition à l'irradiation. De plus, l'intensité de la source lumineuse limite la dynamique de mesure. En particulier, le brevet CN111505695B décrit un instrument de mesure de dose de rayonnement basé sur l'utilisation d'une fibre optique radiosensible, comprenant un coupleur qui divise le laser de pompage en deux faisceaux, et un circuit de détection utile pour convertir le signal optique en signal électrique.

Dans de nombreuses applications terrestres, un dosimètre peut comprendre une partie exposée à l'irradiation et une autre partie protégée de l'irradiation. Au contraire, dans un environnement spatial, l'ensemble du système est soumis aux irradiations. L'environnement spatial impose des conditions de fonctionnement drastiques : un faible encombrement, une faible masse et une faible consommation en énergie, une résistance mécanique aux chocs et vibrations et une insensibilité aux fortes variations thermiques de l'environnement spatial. Ces conditions rendent très difficile l'utilisation de dosimètres à fibre optique en environnement spatial pour des mesures précises de dose.

Un des buts de l'invention est de proposer un dosimètre actif de grande précision sur une gamme dynamique étendue, en particulier aux très faibles doses et débits de dose de radiation. Un autre but de l'invention est de proposer un dosimètre ponctuel ayant une réponse indépendante de la température et du débit de dose, en particulier pour des applications en environnement spatial. Encore un autre but de l'invention est de proposer un dosimètre sensible à l'irradiation d'électrons, de protons, photons, neutrons et/ou d'ions.

### Exposé de l'invention

A cet effet, l'invention concerne un dosimètre, tel que celui de la revendication 1, comprenant une source de lumière apte à générer un faisceau lumineux, un coupleur-séparateur optique apte à recevoir le faisceau lumineux émis par la source de lumière et à transmettre séparément une première partie du faisceau lumineux et une deuxième partie du faisceau lumineux, une fibre optique radiosensible, la fibre optique radiosensible étant disposée pour recevoir la première partie du faisceau lumineux, un premier photodétecteur disposé pour enregistrer une mesure de puissance du faisceau lumineux transmis à travers la fibre optique radiosensible, un bras optique de référence de longueur optique inférieure à celle de la fibre optique radiosensible, le bras optique de référence étant disposé pour recevoir la deuxième partie du faisceau lumineux, un deuxième photodétecteur disposé pour enregistrer une mesure de puissance de référence du faisceau lumineux transmis à travers le bras optique de référence, et un système électronique apte à recevoir simultanément la mesure de puissance du premier photodétecteur et la mesure de puissance de référence du deuxième photodétecteur, le système électronique étant configuré pour extraire une mesure différentielle d'atténuation induite par irradiation dans la fibre optique radiosensible par rapport au bras optique de référence.

Selon l'invention, le faisceau lumineux est non polarisé ou dépolarisé, ou, respectivement, le faisceau lumineux est polarisé et la fibre optique radiosensible est une fibre à maintien de polarisation.

Selon un aspect particulier et avantageux, la source de lumière comprend une source d'émission spontanée amplifiée générant le faisceau lumineux par émission stimulée amplifiée, le faisceau lumineux étant non polarisé.

Selon un autre aspect particulier et avantageux, le dosimètre comprend un dispositif optique actif ou passif disposé en aval de la source de lumière et configuré de façon à dépolariser le faisceau lumineux.

Dans un exemple de réalisation, le dispositif optique passif comprend un dépolariseur, par exemple un dépolariseur de Lyot ou un combineur de polarisation et deux fibres optiques à maintien de polarisation de longueurs différentes.

Dans un autre exemple de réalisation, le dispositif optique actif comprend un modulateur optique de phase, par exemple un modulateur électro-optique.

Avantageusement, la source de lumière comprend une diode laser ou une diode superluminescente.

Avantageusement, la fibre optique radiosensible est une fibre monomode ou multimode. Dans un exemple de réalisation, le bras optique de référence comprend une section de fibre optique.

Selon un aspect particulièrement avantageux, le système électronique comprend un amplificateur logarithmique configuré pour recevoir simultanément la mesure de puissance du premier photodétecteur et la mesure de puissance de référence du deuxième photodétecteur, l'amplificateur logarithmique étant apte à extraire la mesure différentielle d'atténuation induite par irradiation dans la fibre optique radiosensible.

Dans un exemple de réalisation, la source de lumière est apte à émettre le faisceau lumineux à une première longueur d'onde et à une deuxième longueur d'onde distincte de la première longueur d'onde, le premier photodétecteur étant adapté pour enregistrer une mesure de puissance du faisceau lumineux transmis à travers la fibre optique radiosensible à la première longueur d'onde et à la deuxième longueur d'onde, le deuxième photodétecteur étant adapté pour enregistrer la mesure de puissance de référence à la première longueur d'onde et à la deuxième longueur d'onde, et le système électronique est apte à extraire la mesure différentielle d'atténuation induite par irradiation à la première longueur d'onde et à la deuxième longueur d'onde.

Selon un aspect particulier et avantageux, le dosimètre comprend au moins un capteur de température disposé pour acquérir au moins une mesure de température en au moins un point du dosimètre, et le système électronique est adapté pour corriger la mesure différentielle d'atténuation induite par irradiation en fonction de ladite au moins une mesure de température.

Avantageusement, le dosimètre comprend un élément réfléchissant disposé à une extrémité distale de la fibre optique radiosensible, le premier photodétecteur étant disposé pour enregistrer la mesure de puissance du faisceau lumineux transmis après un aller-retour à travers la fibre optique radiosensible.

Selon un aspect particulier, le premier photodétecteur et le deuxième photodétecteur comprennent chacun une photodiode.

Toujours selon l'invention telle que définie dans la revendication 1, le dosimètre comprend une autre fibre optique radiosensible et un diviseur de faisceau disposé entre la source de lumière, la fibre optique radiosensible et l'autre fibre optique radiosensible, le diviseur de faisceau étant apte à diviser le faisceau lumineux entre la fibre optique radiosensible et l'autre fibre optique radiosensible, un autre photodétecteur disposé pour enregistrer une autre mesure de puissance du faisceau lumineux transmis à travers l'autre fibre optique radiosensible, le système électronique étant adapté pour recevoir l'autre mesure de puissance de l'autre photodétecteur, le système électronique étant configuré pour extraire une autre mesure différentielle d'atténuation induite par irradiation dans l'autre fibre optique radiosensible par rapport au bras optique de référence.

L'invention concerne aussi un procédé de dosimétrie, selon la revendication 12, comprenant les étapes suivantes: émission d'un faisceau lumineux ; séparation du faisceau lumineux en une première partie du faisceau lumineux et une deuxième partie du faisceau lumineux ; injection de la première partie du faisceau lumineux dans une fibre optique radiosensible, le faisceau lumineux étant dépolarisé, ou, respectivement, le faisceau lumineux étant polarisée et la fibre optique radiosensible étant une fibre à maintien de polarisation ; injection de la deuxième partie du faisceau lumineux dans un bras optique de référence de longueur optique inférieure à celle de la fibre optique radiosensible, enregistrement sur un premier photodétecteur d'une mesure de puissance du faisceau lumineux transmis à travers la fibre optique radiosensible; enregistrement sur un deuxième photodétecteur d'une mesure de puissance de référence du faisceau lumineux transmis à travers le bras optique de référence ; et traitement électronique de la mesure de puissance du premier photodétecteur et de la mesure de puissance de référence du deuxième photodétecteur pour en extraire une mesure différentielle d'atténuation induite par irradiation dans la fibre optique radiosensible par rapport au bras optique de référence.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

**Brève description des dessins**

De plus, diverses autres caractéristiques de l'invention ressortent de la description annexée effectuée en référence aux dessins qui illustrent des formes, non limitatives, de réalisation de l'invention et où :

[Fig.1] représente schématiquement un dosimètre selon un exemple de réalisation,
[Fig.2] représente schématiquement un dosimètre selon un autre exemple de réalisation,
[Fig.3] représente schématiquement un exemple de source non polarisée.

Il est à noter que sur ces figures les éléments structurels et/ou fonctionnels communs aux différentes variantes peuvent présenter les mêmes références.

**Description détaillée**

La présente divulgation propose un dosimètre ponctuel basé sur une mesure d'atténuation induite par irradiation dans une fibre optique radiosensible. Le dosimètre est configuré pour présenter une grande sensibilité aux faibles doses d'irradiation, une grande précision et une grande dynamique de mesure. Avantageusement, le dosimètre est stable vis-à-vis des variations de température ambiante.

On entend ici par dosimètre ponctuel, un dosimètre apte à effectuer des mesures d'atténuation induite qui sont intégrées sur toute la longueur de la fibre optique. Un tel dosimètre ponctuel se distingue d'un réflectomètre à fibre optique, qui permet de mesurer une atténuation localement dans la fibre et de déterminer la position de cette atténuation en fonction de la direction longitudinale de la fibre.

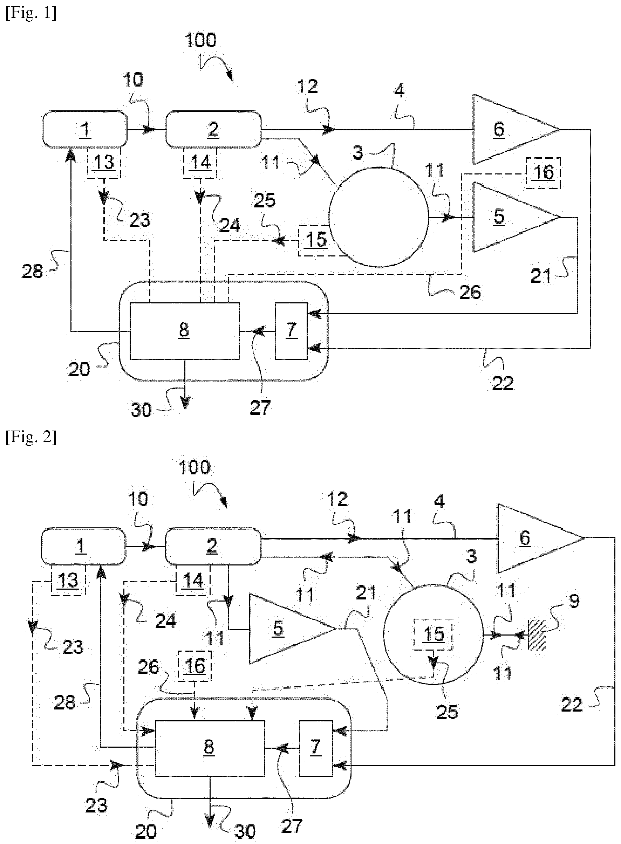

La [Fig.1] illustre la structure d'un dosimètre 100. Le dosimètre 100 comprend une source de lumière 1, un coupleur-séparateur optique 2, une fibre optique radiosensible 3, un bras de référence 4, un premier photodétecteur 5, un deuxième photodétecteur 6 et un système électronique 20. Le principe de la mesure est basé sur une mesure différentielle des pertes optiques par RIA entre deux bras de mesure de longueurs optiques différentes comprenant d'une part la fibre optique radiosensible 3 et d'autre part le bras de référence 4.

La fibre optique radiosensible 3 est une fibre dont les propriétés de transmission optique varient avec la dose d'irradiation reçue. Par exemple, la fibre optique radiosensible 3 est une fibre optique à cœur dopé au phosphore ou à l'aluminium. Par exemple, la fibre optique radiosensible 3 est une fibre phosphosilicate ou aluminosilicate. Une telle fibre est sensible à des rayonnements ionisants dans une gamme d'énergie neutrons, rayons X ou rayons gamma. La fibre optique radiosensible 3 a une grande longueur, comprise entre 50 m et 10 km, par exemple de 100 m, 2 km, 5 km ou 7 km. La longueur de fibre optique est optimisée en tenant compte du coefficient de sensibilité de cette fibre optique à la(les) longueur(s) d'onde de la source utilisée(s), exprimé par exemple en $dB.km^{-1}.Gy^{-1}$. Dans l'exemple illustré sur la [Fig.1], la fibre optique radiosensible 3 sélectionnée est une fibre phosphosilicate de 5 km de long. La fibre optique radiosensible 3 est enroulée sous forme de bobine pour réduire son encombrement. Le diamètre de la bobine de fibre optique radiosensible 3 est en général compris entre 20 mm et 200 mm, par exemple de l'ordre de 40 mm.

Comme décrit de manière détaillée plus loin dans la présente divulgation, la fibre optique radiosensible peut être, selon les modes de réalisation, une fibre monomode (SM), une fibre multimode (MM) ou encore une fibre à maintien de polarisation (PM).

Dans une variante illustrée sur la [Fig.2], un réflecteur 9 est disposé à l'extrémité distale de la fibre optique radiosensible 3. Le réflecteur 9 comprend par exemple un miroir disposé face à l'extrémité distale de la fibre optique radiosensible 3. Le réflecteur 9 peut aussi être constitué d'un traitement réfléchissant appliqué sur l'extrémité distale de la fibre optique radiosensible 3. Le réflecteur 9 peut aussi être constitué d'un réflecteur de Bragg fibré.

Le bras de référence 4 est un bras qui présente un chemin optique beaucoup plus court que la fibre optique radiosensible 3. Le bras de référence 4 comprend par exemple une section de fibre optique de longueur courte. Dans un exemple, la section de fibre optique du bras de référence 4 est de même structure et/ou composition que la fibre optique radiosensible 3 et de longueur très inférieure à celle de la fibre optique radiosensible 3. Cependant, la fibre optique dans le bras de référence n'est pas nécessairement une fibre radiosensible. Par exemple, le bras de référence 4 comprend une section de fibre optique ayant une longueur de 1 m.

Le premier photodétecteur 5 et le deuxième photodétecteur 6 comprennent par exemple des photodiodes.

Le système électronique 20 permet de contrôler et commander les éléments actifs, tels que la source de lumière 1 et les photodétecteurs 5, 6. Le système électronique 20 permet aussi de traiter les mesures des puissances transmises dans la fibre optique radiosensible et dans le bras de référence, de calculer les pertes induites par irradiation et la dose d'irradiation correspondante. Le système électronique 20 permet aussi le transfert à l'utilisateur des données 30 comprenant en particulier le résultat de mesure de dose D extrait de la mesure différentielle de RIA 27. Le dosimètre effectue des mesures en temps réel, avec par exemple acquisition d'un point de mesure sur les deux photodétecteurs 5, 6 toutes les microsecondes (autrement dit à une cadence d'acquisition du MHz), selon les performances de l'électronique de détection. Ce système permet de détecter des évènements radiatifs très brefs. Ce système permet aussi d'effectuer et de lire des mesures différentielles de RIA en temps réel.

En option, le dosimètre 100 comprend un ou plusieurs capteur(s) de température. Par exemple, la [Fig.1] illustre un capteur de température 13 disposé à proximité de la source de lumière 1, un autre capteur de température 14 disposé à proximité du coupleur-séparateur optique 2 et/ou encore un autre capteur de température 15 disposé à proximité de la bobine de fibre optique radiosensible 3 et/ou encore un autre capteur de température 16 disposé à proximité du premier photodétecteur 5 et/ou du deuxième photodétecteur 6. De façon particulièrement avantageuse, les photodiodes 5, 6 sont placées à proximité l'une de l'autre afin qu'elles aient la même température et que leur dépendance thermique se compense en partie. En pratique, le capteur le plus utile est le capteur de température 16 situé près des photodétecteurs 5, 6. Les signaux 23, 24, 25, 26 issus respectivement des capteurs de température 13, 14, 15, 16 sont transmis au système électronique 20. Un calculateur 8 utilise un modèle de conversion des pertes optiques en dose qui utilise ces mesures ponctuelles de température pour corriger certaines dérives dues aux effets thermiques sur les composants du dosimètre, en particulier sur les photodiodes 5, 6 et/ou respectivement sur la fibre optique radiosensible 3.

Nous allons expliquer le fonctionnement du dosimètre 100. La source de lumière 1 émet un faisceau lumineux 10. Le faisceau lumineux 10 est dans le domaine visible ou infrarouge. Le coupleur-séparateur optique 2 reçoit le faisceau lumineux 10 et le sépare en une première partie du faisceau lumineux 11 et une deuxième partie du faisceau lumineux 12. La première partie du faisceau lumineux 11 est injectée à une extrémité proximale de la fibre optique radiosensible 3. Simultanément, la deuxième partie du faisceau lumineux 12 est injectée dans le bras de référence 4. Le coupleur-séparateur optique 2 est par exemple un coupleur 90:10 de façon à injecter 90% de la puissance optique dans la fibre optique radiosensible 3 et 10% de la puissance optique restants dans le bras de référence 4. Avantageusement, on utilise un coupleur 50/50 qui présente un ratio de couplage optique stable par symétrie. D'autres ratios de couplage optique sont envisageables sans sortir du cadre de la présente divulgation.

Le premier photodétecteur 5 reçoit la première partie du faisceau lumineux 11 sortant de la fibre optique radiosensible 3 et le deuxième photodétecteur 6 reçoit la deuxième partie du faisceau lumineux 12 sortant du bras de référence 4. Le premier détecteur 5 mesure ainsi la puissance 21 de la première partie du faisceau lumineux 11 après transmission à travers la fibre optique radiosensible 3. Le deuxième photodétecteur 6 mesure la puissance 22 de la deuxième partie du faisceau lumineux 12 après transmission à travers le bras de référence 4.

Dans la variante illustrée sur la [Fig.2], le réflecteur 9 réfléchit la première partie du faisceau lumineux 11 transmise une première fois à travers la fibre optique radiosensible 3 pour qu'elle se propage une deuxième fois, en sens inverse, à travers la fibre optique radiosensible 3. Le premier détecteur 5 mesure alors la puissance 21 de la première partie du faisceau lumineux 11 après un aller-retour à travers la fibre optique radiosensible 3. Cette variante permet de multiplier par deux la longueur du chemin optique à travers la fibre optique radiosensible 3 sans augmenter sa longueur physique.

On note D la dose de radiation reçue par la fibre optique radiosensible 3. De manière générale, par exemple dans le cas d'un dosimètre illustré sur la [Fig.1], la mesure de dose se déduit de l'absorption A due aux radiations dans la fibre optique via un modèle mathématique, basé par exemple sur la formule suivante :

$$D = -\frac{10}{\eta L} \log_{10} A$$

Où $\eta$ est la sensibilité de la fibre aux radiations, (par exemple $\eta$=4 dB/km/Gy($SiO_2$) à 1550 nm pour une fibre phosphosilicate) et L est la longueur de la fibre optique radiosensible 3. Cette formule générale doit être adaptée par exemple dans le cas d'un dosimètre utilisant un miroir comme illustré sur la [Fig.2], où la longueur du chemin optique est égale au double de la longueur de la fibre optique. Une précalibration permet d'ajuster le modèle sur toute la dynamique de mesure. Il est avantageux d'utiliser une longueur L de fibre importante, pour une précision donnée sur la lecture d'absorption A. Cependant, plus la longueur L de la fibre optique radiosensible 3 est grande, plus l'absorption A due aux radiations dans la fibre sensible est importante. Or, à la longueur d'onde de 650 nm, avec une longueur L de 2 km, l'absorption initiale (avant radiations) de la fibre est déjà de l'ordre de 20 dB. Afin d'obtenir une mesure précise d'atténuation optique, il est avantageux d'utiliser une source de lumière 1 unique suivie du coupleur -séparateur 2 passif qui divise la puissance optique entre la deuxième partie du faisceau lumineux 12 vers le bras de référence et la première partie du faisceau lumineux 11 sur le bras qui passe dans la fibre optique radiosensible 3 dont on veut mesurer l'atténuation A. Cette architecture permet de s'affranchir des fluctuations de puissance de la source optique. Toutefois, la différence de puissance optique mesurée par les deux photodétecteurs 5 et 6 peut être très importante, en particulier lorsque la longueur L de la fibre optique radiosensible 3 est importante, généralement de plusieurs km de long, par exemple de 5 km.

Le système électronique 20 est conçu pour effectuer un rapport entre la puissance 21 de la première partie du faisceau lumineux 11 et la puissance 22 de la deuxième partie du faisceau lumineux 12 de façon à obtenir une mesure différentielle d'atténuation induite par irradiation 27. Le calculateur 8 utilise ensuite la mesure différentielle de RIA 27 pour en déduire la dose D d'irradiation reçue, sur la base d'un modèle par exemple comme décrit ci-dessus. Le fait de normaliser à chaque instant la puissance 21 transmise via la fibre optique radiosensible 3 par rapport à la puissance 22 transmise via le bras de référence 4 permet de s'affranchir des variations de puissance de la source de lumière 1 en fonction du temps.

Selon un aspect particulier et avantageux, le système électronique 20 comprend un amplificateur logarithmique 7. L'amplificateur logarithmique 7 est par exemple un amplificateur logarithmique analogique intégré à courant continu (ou « integrated DC logarithmic amplifier » en anglais). L'amplificateur logarithmique 7 reçoit simultanément sur deux voies d'entrée distinctes la puissance 21 de la première partie du faisceau lumineux 11 et la puissance 22 de la deuxième partie du faisceau lumineux 12. Par exemple avec deux photodiodes 5, 6, l'amplificateur logarithmique 7 reçoit sur une voie d'entrée le photocourant émis par la photodiode 5 de signal et sur une autre voie d'entrée le photocourant émis par la photodiode 6 de référence. L'amplificateur logarithmique 7 permet ainsi de comparer ces photocourants. Plus précisément, l'amplificateur logarithmique 7 effectue directement une opération analogique de rapport logarithmique qui permet de fournir directement la mesure différentielle de RIA 27 en décibels. En effet, l'amplificateur logarithmique 7 utilise la relation exponentielle entre la tension et le courant dans une jonction PN pour avoir une relation entre un courant d'entrée et une tension de sortie intrinsèquement logarithmique, ce qui permet d'obtenir une mesure d'atténuation précise même lorsque le photocourant varie de plusieurs ordres de grandeur. Au contraire, un système électronique basé sur l'utilisation de deux amplificateurs transimpédance indépendants génère une forte différence entre les deux photocourants, et nécessite un réglage des amplificateurs transimpédance de façon très déséquilibrée pour compenser cette forte différence.

Contrairement aux systèmes électroniques dans lesquels chaque signal analogique est d'abord numérisé via un convertisseur analogique-numérique avant d'appliquer un calcul numérique de division, les opérations sont effectuées directement et principalement sur des signaux analogiques. De ce fait, la précision de la mesure n'est pas limitée par la résolution ni par la dynamique d'un convertisseur analogique-numérique. De plus, le flux de données en sortie de l'amplificateur logarithmique 7 n'est pas limité par la taille des blocs mémoire. L'utilisation d'un tel amplificateur logarithmique 7 permet d'augmenter fortement la précision et la dynamique de mesure du signal de RIA de plusieurs ordres de grandeur, notamment vers les faibles doses d'irradiation.

Cependant, selon un aspect de la présente divulgation, des instabilités de mesure de puissance liés à des effets de polarisation limitent la détection des faibles doses de radiations. En général, la polarisation de la lumière n'est pas conservée lors de la propagation dans une fibre monomode (SM) qui n'est pas à maintien de polarisation. La polarisation d'un faisceau lumineux change en particulier très fortement en fonction du stress mécanique de la fibre ou de la température. Si un faisceau lumineux polarisé est injecté dans une fibre monomode, la polarisation du faisceau lumineux en sortie de la fibre est difficilement contrôlable et change rapidement en particulier à cause de fluctuations de températures. De plus, certains composants optiques indispensables à la mesure d'atténuation tels que le coupleur-séparateur 2 et les photodiodes 6, 7 ont une réponse qui dépend légèrement de la polarisation. On estime que la différence de pertes liées à la polarisation (PDL pour « polarization dependant loss » en anglais) entre les deux polarisations orthogonales est de l'ordre d'au moins 0.1 dB. De façon inattendue, et bien que cette différence soit apparemment faible, ce phénomène est susceptible de limiter la précision d'une mesure d'atténuation induite par irradiation dans une fibre monomode (SM). En effet, les fluctuations de polarisation sont converties en fluctuations de puissance. Il découle de la présente divulgation que les effets de polarisation affectent directement et fortement la limite de détection et la précision d'un dosimètre à fibre optique exploitant le phénomène d'atténuation induite par irradiation (RIA) pour suivre l'évolution temporelle de la dose déposée.

Différentes solutions sont ici proposées pour réduire ou supprimer les effets de la polarisation dans un dosimètre à fibre optique.

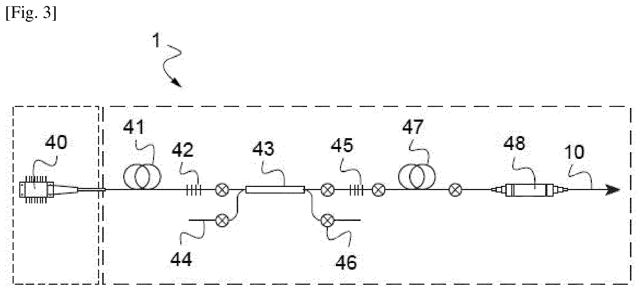

Selon un premier mode de réalisation, la source de lumière 1 est une source optique non-polarisée. Différentes sources non-polarisées sont envisagées. A titre d'exemple non limitatif, on utilise une source à émission spontanée amplifiée (ASE pour « Amplified Stimulated Emission ») illustrée sur la [Fig.3]. La source 1 de la [Fig.3] comporte une diode de pompe 40 reliée via une fibre optique 41 à un coupleur-multiplexeur 43. La diode de pompe 40 émet un signal de pompe à une longueur d'onde de pompe, par exemple de 980 nm. Un premier réseau de Bragg 42 est disposé en amont du coupleur-multiplexeur 43 et configuré pour favoriser l'émission de la diode laser à une longueur d'onde précise, ici de 980 nm. Le coupleur-multiplexeur 43 reçoit sur une voie d'entrée le signal de pompe filtré à 980 nm. Le coupleur-multiplexeur 43 reçoit sur une autre voie d'entrée 44 un signal à amplifier à une longueur d'onde déterminée en fonction du milieu amplificateur. Dans le cas d'une source ASE erbium, la longueur d'onde du signal à amplifier est à 1550 nm. Un deuxième réseau de Bragg 45 est disposé en aval du coupleur-multiplexeur 43 et configuré pour favoriser l'émission stable à 1550 nm par le milieu amplificateur optique 47, ici constitué d'une fibre optique dopée erbium. En sortie du coupleur-multiplexeur 43, le signal de pompe à 980 nm et le signal à amplifier à 1550 nm sont injectés dans la fibre amplificatrice dopée erbium. Un isolateur optique 48 est disposé en sortie de la fibre amplificatrice pour transmettre le faisceau lumineux 10 à 1550 nm émis par la source 1. La source 1 effectue ainsi la conversion optique du faisceau pompe polarisé émis par la diode laser de pompe, par exemple à 980 nm ou à 1480 nm, en un faisceau lumineux à une longueur d'onde dans la bande télécom (1532-1550 nm). En dessous du seuil de lasage, les photons émis à longueur d'onde télécom sont émis spontanément de sorte que le faisceau lumineux émis dans la bande télécom est non-polarisé. Cette source de lumière est alors non polarisée. Autrement dit, le faisceau lumineux 10 généré par émission stimulée amplifiée est non polarisé. Dans ce cas, le coupleur-séparateur optique 2 n'est pas à maintien de polarisation ni polarisant. La première partie du faisceau lumineux 11 et la deuxième partie du faisceau lumineux 12 sont non polarisées. Le dosimètre 100 basé sur une telle source non polarisée peut utiliser des composants optiques standard et en particulier une fibre optique radiosensible 3 de type monomode (SM) ou multimode (MM) qui n'est pas à maintien de polarisation. De même, le bras de référence 4 est alors basé sur des composants qui ne sont pas à maintien de polarisation, par exemple une section de fibre optique standard (SM) ou une section de fibre optique multimode (MM). Il existe des polarimètres par exemple à base de polariseurs tournants qui permettent de mesurer l'état de polarisation d'un faisceau lumineux. Pour un faisceau lumineux non polarisé, on mesure par exemple une puissance identique dans les deux modes de polarisation transverses et pas de cohérence de phase entre eux. L'utilisation d'une source erbium ASE permet de supprimer les fluctuations de polarisation sur les mesures de RIA.

Selon une variante du premier mode de réalisation, on utilise une source 1 polarisée combinée à un dispositif optique passif ou actif pour moyenner la polarisation du faisceau lumineux 10 source. A titre d'exemple non limitatif, on utilise une source comprenant une diode superluminescente (SLED) qui émet un faisceau lumineux polarisé. En aval de la source polarisée, on dispose un composant optique actif ou passif pour dépolariser le faisceau lumineux émis par la source.

Dans un exemple, le dispositif optique passif est du type dépolariseur de Lyot. Le principe du dépolariseur de Lyot est de faire suivre aux deux composantes de la polarisation transverses des chemins optiques différents et dont la longueur de chemin optique est plus grande que la longueur de cohérence de la source puis de recombiner les deux polarisations. Le dépolariseur de Lyot peut être réalisé en soudant bout à bout deux sections de fibres optiques à maintien de polarisation avec des axes propres désalignés de 45 degrés l'une par rapport à l'autre. Dans ce cas les deux chemins optiques correspondent aux deux indices de la fibre PM. En variante, si la longueur de cohérence de la source est grande, on utilise un combineur de polarisation pour injecter les deux composantes de polarisation transverses dans des fibres PM différentes et les recombiner en sortie. Un tel dépolariseur passif est particulièrement bien adapté à une source lumineuse ayant une longueur de cohérence relativement faible, comme par exemple une diode superluminescente (SLED).

Dans un autre exemple, le dispositif optique actif est du type brouilleur de polarisation. Ce dispositif optique actif est configuré pour moduler la phase de manière aléatoire afin de casser la cohérence de la source et sa polarisation. Le dispositif optique actif comprend un modulateur optique de phase par exemple un modulateur électro-optique. En variante, dispositif optique actif est formé en appliquant une contrainte mécanique adaptée sur la fibre elle-même pour moduler la phase de manière aléatoire.

Selon un deuxième mode de réalisation, la source 1 est polarisée, la fibre optique radiosensible 3 est une fibre à maintien de polarisation (PM) et toute la chaîne optique entre la source 1 et les photodétecteurs 5, 6 est à maintien de polarisation. Avantageusement, cette fibre optique radiosensible 3 est fabriquée en dopant le cœur ou la gaine optique d'une fibre PM classique, par exemple avec un dopage au phosphore. Dans ce cas, le coupleur-séparateur optique 2 est à maintien de polarisation. La première partie du faisceau lumineux 11 et la deuxième partie du faisceau lumineux 12 sont polarisées. Les soudures côté source et côté bobine sont réalisées de manière à aligner les axes propres de la fibre optique radiosensible 3 à maintien de polarisation par rapport aux axes propres de la source polarisée. De même, les axes propres du bras de référence 4 sont alignés sur axes propres de la source polarisée. La première partie du faisceau lumineux 11 et la deuxième partie du faisceau lumineux 12 sont ainsi polarisées. La polarisation du faisceau lumineux étant alors conservée lors de la propagation dans la fibre optique radiosensible 3 et dans le bras de référence 4, la PDL n'a pas d'influence sur la mesure d'atténuation induite par irradiation.

En variante, le dosimètre comprend au moins deux sources émettant à deux longueurs d'onde distinctes, chaque source étant reliée à une fibre optique adaptée. Par exemple, les deux sources sont polarisées et les deux bobines de fibre optique radiosensibles sont des fibres optiques à maintien de polarisation. Dans un autre exemple, les deux sources sont apolarisées ou dépolarisées. Dans encore un autre exemple, le dosimètre comprend une première source polarisée associée à une fibre optique radiosensible à maintien de polarisation et une deuxième source apolarisée ou dépolarisée. La combinaison de deux sources à deux longueurs d'onde différentes permet une redondance des mesures et donc une amélioration de la précision. En variante, une seule et même source est adaptée pour émettre le faisceau lumineux à plusieurs longueurs d'onde, par exemple à 16 longueurs d'onde distinctes.

Selon l'invention revendiquée, on utilise une seule source de lumière 1 couplée simultanément à plusieurs bobines de fibres optiques radiosensibles, par exemple à deux ou trois bobines de fibre optique de longueurs différentes et/ou ayant une sensibilité différente aux radiations ionisantes, en plus du bras de référence 4. A cet effet, on utilise par exemple une autre fibre optique radiosensible et un diviseur de faisceau disposé entre la source de lumière 1, la fibre optique radiosensible 3 et l'autre fibre optique radiosensible. Le diviseur de faisceau reçoit le faisceau lumineux 10 de la source de lumière et le divise entre la fibre optique radiosensible 3 et l'autre fibre optique radiosensible. Dans ce cas, le diviseur est situé en amont du coupleur 2. Il peut s'agir d'un diviseur de puissance type couleur 1xN ou d'un multiplexeur qui permet d'adresser les différentes bobines séquentiellement. Chaque bobine a besoin de son bras de référence propre. De manière analogue au premier détecteur associé à la fibre optique radiosensible, un autre photodétecteur est associé à l'autre fibre optique radiosensible et disposé pour enregistrer une autre mesure de puissance du faisceau lumineux transmis à travers l'autre fibre optique radiosensible. Le système électronique 20 est ici adapté pour recevoir l'autre mesure de puissance de l'autre photodétecteur, simultanément avec la mesure du bras de référence. Le système électronique 20 est configuré pour extraire une autre mesure différentielle d'atténuation induite par irradiation dans l'autre fibre optique radiosensible par rapport au bras optique de référence. Une telle configuration permet avantageusement de lire plusieurs dosimètres avec une seule source optique de manière à réduire les coûts.

La réduction drastique des effets de la polarisation dans le dosimètre à fibre optique permet de rendre le dosimètre moins sensible aux variations thermiques ambiantes. La réduction des fluctuations de la polarisation dans le dosimètre à fibre optique permet ainsi d'abaisser le seuil de détection des faibles doses de radiations, d'améliorer la précision des mesures de RIA et aussi d'augmenter la dynamique de mesure de dose.

Au total la combinaison d'un système électronique basé sur un amplificateur logarithmique et la réduction des effets de polarisation permet d'abaisser le seuil la détection des faibles doses de radiations jusque quelques dizaines de microGy, d'améliorer la précision des mesures de RIA et aussi d'augmenter la dynamique de mesure de dose pour s'étendre entre 1 Gy et 100 Gy par exemple. Dans un exemple de réalisation, le dosimètre de la présente divulgation permet de réduire le bruit de détection de 1 à 2 ordres de grandeur. Le débit de dose mesuré se trouve dans une gamme comprise entre 100 gray/j et 1 Mgray/j. Le dosimètre de la présente divulgation permet ainsi des mesures de doses d'irradiation avec une précision remarquable de l'ordre de $10^{-4}$ en relatif sur une gamme dynamique étendue sur 10 dB.

Cette architecture permet de s'affranchir des fluctuations de puissance de la source de lumière 1. La mesure différentielle de RIA permet de choisir une source de lumière 1 dont l'intensité n'est pas nécessairement stabilisée en fonction du temps. On choisit par exemple une source ASE ou une diode laser.

Le dosimètre peut être conditionné dans un boitier très compact, par exemple un cylindre d'environ 40 mm de diamètre et 20 mm de haut et de faible poids. Le dosimètre peut ainsi être embarqué à bord d'une station spatiale ou même dans la ceinture d'un astronaute pour une sortie extravéhiculaire. Le dosimètre fournit des mesures instantanées. Le boitier peut être configuré pour transmettre les mesures de dose par exemple par une liaison sans fil à un afficheur. Ces mesures permettent par exemple d'anticiper une éruption solaire susceptible d'endommager des équipements sensibles.

Ce dosimètre ponctuel peut aussi trouver des applications dans le domaine médical pour la mesure ponctuelle de dose de radiation produite par un équipement médical, par exemple en radiothérapie pulsée. Ce dosimètre ponctuel trouve aussi des applications dans le domaine nucléaire, pour le contrôle ou le démantèlement de toutes installations nucléaires de type fusion ou fission.

Bien entendu, diverses autres modifications peuvent être apportées à l'invention dans le cadre des revendications annexées.

## Revendications

**1.** Dosimètre (100) comprenant :

- une source de lumière (1) apte à générer un faisceau lumineux (10),
- un coupleur-séparateur optique (2) apte à recevoir le faisceau lumineux (10) émis par la source de lumière (1) et à transmettre séparément une première partie du faisceau lumineux (11) et une deuxième partie du faisceau lumineux (12),
- une fibre optique radiosensible (3), la fibre optique radiosensible (3) étant disposée pour recevoir la première partie du faisceau lumineux (11),
- un premier photodétecteur (5) disposé pour enregistrer une mesure de puissance (21) du faisceau lumineux transmis à travers la fibre optique radiosensible (3),
- un bras optique de référence (4) de longueur optique inférieure à celle de la fibre optique radiosensible (3), le bras optique de référence (4) étant disposé pour recevoir la deuxième partie du faisceau lumineux (12),
- un deuxième photodétecteur (6) disposé pour enregistrer une mesure de puissance (22) de référence du faisceau lumineux transmis à travers le bras optique de référence (4), et
- un système électronique (20) apte à recevoir simultanément la mesure de puissance (21) du premier photodétecteur (5) et la mesure de puissance (22) de référence du deuxième photodétecteur (6), le système électronique (20) étant configuré pour extraire une mesure différentielle d'atténuation induite par irradiation dans la fibre optique radiosensible (3) par rapport au bras optique de référence (4),
**caractérisé en ce que**
- le faisceau lumineux (10) est non polarisé ou dépolarisé ou
- le faisceau lumineux (10) est polarisé et la fibre optique radiosensible (3) est une fibre à maintien de polarisation,

et **en ce que** le dosimètre comprend une autre fibre optique radiosensible et un diviseur de faisceau disposé entre la source de lumière (1), la fibre optique radiosensible (3) et l'autre fibre optique radiosensible, le diviseur de faisceau étant apte à diviser le faisceau lumineux (10) entre la fibre optique radiosensible (3) et l'autre fibre optique radiosensible, un autre photodétecteur disposé pour enregistrer une autre mesure de puissance du faisceau lumineux transmis à travers l'autre fibre optique radiosensible, le système électronique (20) étant adapté pour recevoir l'autre mesure de puissance de l'autre photodétecteur, le système électronique (20) étant configuré pour extraire une autre mesure différentielle d'atténuation induite par irradiation dans l'autre fibre optique radiosensible par rapport au bras optique de référence.

**2.** Dosimètre (100) selon la revendication 1 dans lequel la source de lumière (1) comprend une source d'émission spontanée amplifiée générant le faisceau lumineux par émission stimulée amplifiée, le faisceau lumineux (10) étant non polarisé.

**3.** Dosimètre (100) selon la revendication 1 comprenant un dispositif optique actif ou passif disposé en aval de la source de lumière (1) et configuré de façon à dépolariser le faisceau lumineux (10).

**4.** Dosimètre (100) selon la revendication 3 dans lequel le dispositif optique passif comprend un dépolariseur de Lyot ou un combineur de polarisation et deux fibres optiques à maintien de polarisation de longueurs différentes.

**5.** Dosimètre (100) selon la revendication 3 dans lequel le dispositif optique actif comprend un modulateur optique de phase.

**6.** Dosimètre (100) selon l'une des revendication 3 à 5 dans lequel la source de lumière (1) comprend une diode laser ou une diode superluminescente.

**7.** Dosimètre (100) selon l'une quelconque des revendications 1 à 6 dans lequel la fibre optique radiosensible (3) est une fibre monomode ou multimode.

**8.** Dosimètre (100) selon l'une quelconque des revendications 1 à 7 dans lequel le bras optique de référence (4) comprend une section de fibre optique.

**9.** Dosimètre (100) selon l'une quelconque des revendications 1 à 8 dans lequel le système électronique (20) comprend un amplificateur logarithmique (7) configuré pour recevoir simultanément la mesure de puissance (21) du premier photodétecteur (5) et la mesure de puissance (22) de référence du deuxième photodétecteur (6), l'amplificateur logarithmique (7) étant apte à extraire la mesure différentielle d'atténuation induite par irradiation (27) dans la fibre optique radiosensible.

**10.** Dosimètre (100) selon l'une quelconque des revendications 1 à 9 dans lequel la source de lumière (1) est apte à émettre le faisceau lumineux (10) à une première longueur d'onde et à une deuxième longueur d'onde distincte de la première longueur d'onde, le premier photodétecteur (5) étant adapté pour enregistrer une mesure de puissance (21) du faisceau lumineux transmis à travers la fibre optique radiosensible (3) à la première longueur d'onde et à la deuxième longueur d'onde, le deuxième photodétecteur (6) étant adapté pour enregistrer la mesure de puissance (21) de référence à la première longueur d'onde et à la deuxième longueur d'onde, et en ce que le système électronique (20) est apte à extraire la mesure différentielle d'atténuation induite par irradiation à la première longueur d'onde et à la deuxième longueur d'onde.

**11.** Dosimètre (100) selon l'une quelconque des revendications 1 à 10 comprenant au moins un capteur de température (13, 14, 15) disposé pour acquérir au moins une mesure de température (23, 24, 25) en au moins un point du dosimètre, et en ce que le système électronique (20) est adapté pour corriger la mesure différentielle d'atténuation induite par irradiation en fonction de ladite au moins une mesure de température (23, 24, 25).

**12.** Procédé de dosimétrie comprenant les étapes suivantes:

- émission d'un faisceau lumineux (10),
- séparation du faisceau lumineux (10) en une première partie du faisceau lumineux (11) et une deuxième partie du faisceau lumineux (12),
- injection de la première partie du faisceau lumineux (11) dans une fibre optique radiosensible (3) et dans une autre fibre optique radiosensible, le faisceau lumineux (10) étant dépolarisé, ou, respectivement, le faisceau lumineux (10) étant polarisée et la fibre optique radiosensible (3) étant une fibre à maintien de polarisation ;

- injection de la deuxième partie du faisceau lumineux (12) dans un bras optique de référence (4) de longueur optique inférieure à celle de la fibre optique radiosensible (3),
- enregistrement sur un premier photodétecteur (5) d'une mesure de puissance (21) du faisceau lumineux transmis à travers la fibre optique radiosensible (3) ;
- enregistrement sur un autre photodétecteur d'une autre mesure de puissance du faisceau lumineux transmis à travers l'autre fibre optique radiosensible ;
- enregistrement sur un deuxième photodétecteur (6) d'une mesure de puissance (22) de référence du faisceau lumineux transmis à travers le bras optique de référence (4) ;
- traitement électronique de la mesure de puissance (21) du premier photodétecteur (5) et de la mesure de puissance (22) de référence du deuxième photodétecteur (6) pour en extraire une mesure différentielle d'atténuation induite par irradiation dans la fibre optique radiosensible (3) par rapport au bras optique de référence (4) ;
- traitement électronique de l'autre mesure de puissance de l'autre photodétecteur et de la mesure de puissance (22) de référence du deuxième photodétecteur (6) pour en extraire une autre mesure différentielle d'atténuation induite par irradiation dans l'autre fibre optique radiosensible par rapport au bras optique de référence (4).

## Patentansprüche

**1.** Dosimeter (100) mit:

- einer zum Erzeugen eines Lichtstrahls (10) geeigneten Lichtquelle (1),
- einem zum Empfangen des von der Lichtquelle (1) ausgesandten Lichtstrahls (10) und zum getrennten Übertragen eines ersten Teils (11) des Lichtstrahls und eines zweiten Teils (12) des Lichtstrahls geeigneten optischen Koppler-Trenner (2),
- einer strahlungsempfindlichen optischen Faser (3), wobei die strahlungsempfindliche optische Faser (3) zum Empfangen des ersten Teils (11) des Lichtstrahls angeordnet ist,
- einem zum Registrieren eines Stärkemaßes (21) des durch die strahlungsempfindliche optische Faser (3) übertragenen Lichtstrahls angeordneten ersten Lichtsensor (5),
- einem optischen Bezugsarm (4) mit einer kleineren optischen Länge als der der strahlungsempfindlichen optischen Faser (3), wobei der optische Bezugsarm (4) zum Empfangen des zweiten Teils (12) des Lichtstrahls angeordnet ist,
- einem zum Registrieren eines Bezugsstärkemaßes (22) des durch den optischen Bezugsarm (4) übertragenen Lichtstrahls angeordneten zweiten Lichtsensor (6), und
- einem zum gleichzeitigen Empfangen des Stärkemaßes (21) des ersten Lichtsensors (5) und des Bezugsstärkemaßes (22) des zweiten Lichtsensors (6) geeigneten elektronischen System (20), wobei das elektronische System (20) dazu ausgelegt ist, ein differentielles Maß für die durch die Bestrahlung in der strahlungsempfindlichen optischen Faser (3) gegenüber dem optischen Bezugsarm (4) erzeugte Dämpfung abzuleiten,

**dadurch gekennzeichnet, daß**

- der Lichtstrahl (10) nicht polarisiert oder entpolarisiert ist oder
- der Lichtstrahl (10) polarisiert ist und die strahlungsempfindliche optische Faser (3) eine Faser mit Polarisationserhalt ist

und daß das Dosimeter eine weitere strahlungsempfindliche optische Faser und einen zwischen der Lichtquelle (1), der strahlungsempfindlichen optischen Faser (3) und der weiteren strahlungsempfindlichen optischen Faser angeordneten Strahlteiler, wobei der Strahlteiler geeignet ist, den Lichtstrahl (10) zwischen der strahlungsempfindlichen optischen Faser (3) und der weiteren strahlungsempfindlichen Faser aufzuteilen, und einen zum Registrieren eines weiteren Stärkemaßes des durch die weitere strahlungsempfindliche optische Faser übertragenen Lichtstrahls angeordneten weiteren Lichtsensor aufweist, wobei das elektronische System (20) dazu ausgelegt ist, das weitere Stärkemaß des weiteren Lichtsensors zu empfangen, wobei das elektronische System (20) dazu ausgelegt ist, ein weiteres differentielles Maß für die durch die Bestrahlung in der weiteren strahlungsempfindlichen optischen Faser gegenüber dem optischen Bezugsarm erzeugten Dämpfung abzuleiten.

**2.** Dosimeter (100) gemäß Anspruch 1, bei dem die Lichtquelle (1) eine Quelle für eine spontane verstärkte, den Lichtstrahl durch stimulierte verstärkte Ausstrahlung erzeugende Ausstrahlung aufweist, wobei der Lichtstrahl (10) nicht polarisiert ist.

**3.** Dosimeter (100) gemäß Anspruch 1 mit einer aktiven oder passiven nach der Lichtquelle (1) angeordneten und für die Depolarisierung des Lichtstrahls (10) ausgelegten optischen Vorrichtung.

4. Dosimeter (100) gemäß Anspruch 3, bei dem die passive optische Vorrichtung einen Lyot-Depolaristor oder einen Polarisationskombinierer und zwei optische Fasern unterschiedlicher Länge zum Erhalt von Polarisation aufweist.

5. Dosimeter (100) gemäß Anspruch 3, bei dem die aktive optische Vorrichtung einen optischen Phasenmodulator aufweist.

6. Dosimeter (100) gemäß einem der Ansprüche 3 bis 5, bei dem die Lichtquelle (1) eine Laserdiode oder eine stark leuchtende Diode aufweist.

7. Dosimeter (100) gemäß einem der Ansprüche 1 bis 6, bei dem die strahlungsempfindliche optische Faser (3) eine Monomode- oder Multimodefaser ist.

8. Dosimeter (100) gemäß einem der Ansprüche 1 bis 7, bei dem der optische Bezugsarm (4) einen Abschnitt mit optischer Faser aufweist.

9. Dosimeter (100) gemäß einem der Ansprüche 1 bis 8, bei dem das elektronische System (20) einen logarithmischen Verstärker (7) aufweist, der zum gleichzeitigen Empfangen der Leistungsmessung (21) des ersten Lichtsensors (5) und der Bezugsleistungsmessung (22) des zweiten Lichtsensors (6) ausgelegt ist, wobei der logarithmische Verstärker (7) geeignet ist, das durch Bestrahlung (27) in die strahlungsempfindliche optische Faser eingebrachte differentielle Maß für die Dämpfung abzuleiten.

10. Dosimeter (100) gemäß einem der Ansprüche 1 bis 9, bei dem die Lichtquelle (1) geeignet ist, den Lichtstrahl (10) mit einer ersten Wellenlänge und mit einer von der ersten Wellenlänge verschiedenen zweiten Wellenlänge abzustrahlen, wobei der erste Lichtsensor (5) dafür ausgelegt ist, eine Leistungsmessung (21) des durch die strahlungsempfindliche Glasfaser (3) mit der ersten Wellenlänge und der zweiten Wellenlänge übertragenen Lichtstrahls einzuspeichern, wobei der zweite Lichtsensor (6) dafür ausgelegt ist, die Bezugsleistungsmessung (21) bei der ersten Wellenlänge und der zweiten Wellenlänge einzuspeichern, und daß das elektronische System (20) geeignet ist, das durch Bestrahlung bei der ersten Wellenlänge und bei der zweiten Wellenlänge eingebrachte differentielle Dämpfungsmaß abzuleiten.

11. Dosimeter (100) gemäß einem der Ansprüche 1 bis 10 mit mindestens einem Temperatursensor (13, 14, 15), der zum Erfassen mindestens einer Temperaturmessung an mindestens einem Punkt des Dosimeters angeordnet ist, und daß das elektronische System (20) dazu ausgelegt ist, das durch Bestrahlung eingebrachte differentielle Dämpfungsmaß in Abhängigkeit von der mindestens einen Temperaturmessung (23, 24, 25) zu korrigieren.

12. Dosimetrieverfahren mit den folgenden Schritten:

- Aussenden eines Lichtstrahls (10),
- Auftrennen des Lichtstrahls (10) in einen ersten Teil (11) des Lichtstrahls und einen zweiten Teil (12) des Lichtstrahls,
- Eingeben des ersten Teils (11) des Lichtstrahls in eine strahlungsempfindliche optische Faser (3) und in eine weitere strahlungsempfindliche optische Faser, wobei der Lichtstrahl (10) depolarisiert ist oder aber der Lichtstrahl (10) polarisiert und die strahlungsempfindliche Glasfaser (3) eine Faser mit Polarisationserhalt ist;
- Eingeben des zweiten Teils (12) des Lichtstrahls in einen optischen Bezugsarm (4) mit einer optischen Länge, die kleiner als jene der strahlungsempfindlichen optischen Faser (3) ist,
- Einspeichern eines Leistungsmaßes (21) des durch die strahlungsempfindliche optische Faser (3) übertragenen Lichtstrahls auf einem ersten Fotosensor (5);
- Einspeichern eines weiteren Leistungsmaßes des durch die weitere strahlungsempfindliche optische Faser übertragenen Lichtstrahls auf einem weiteren Fotosensor;
- Einspeichern eines Bezugsleistungsmaßes (22) des durch den optischen Bezugsarm (4) übertragenen Lichtstrahls auf einem zweiten Fotosensor (6);
- elektronische Bearbeitung der Leistungsmessung (21) des ersten Fotosensors (5) und der Bezugsleistungsmessung (22) des zweiten Fotosensors (6), um daraus eine durch die Bestrahlung in die strahlungsempfindliche optische Faser (3) eingebrachte differentielle Dämpfungsmessung gegenüber dem optischen Bezugsarm (4) abzuleiten, :
- elektronische Bearbeitung der anderen Leistungsmessung des anderen Fotosensors und der Bezugsleistungsmessung (22) des zweiten Fotosensors (6), um daraus eine weitere, durch eine Bestrahlung in eine weitere strahlungsempfindliche optische Faser eingebrachte differentielle Dämpfungsmessung gegenüber dem optischen Bezugsarm (4) abzuleiten.

## Claims

1. A dosimeter (100) comprising:

- a light source (1) capable of generating a light beam (10),
- an optical coupler-splitter (2) capable of receiving the light beam (10) emitted by the light source (1) and to transmit separately a first part of the light beam (11) and a second part of the light beam (12),
- a radio-sensitive optical fibre (3), the radio-sensitive optical fibre (3) being arranged to receive the first part of the light beam (11),
- a first photodetector (5) arranged to record a power measurement (21) of the light beam transmitted through the radio-sensitive optical fibre (3),
- a reference optical arm (4) of smaller optical length than that of the radio-sensitive optical fibre (3), the reference optical arm (4) being arranged to receive the second part of the light beam (12),
- a second photodetector (6) arranged to record a reference power measurement (22) of the light beam transmitted through the reference optical arm (4), and
- an electronic system (20) capable of receiving simultaneously the power measurement (21) of the first photodetector (5) and the reference power measurement (22) of the second photodetector (6), the electronic system (20) being configured to extract a differential radiation induced attenuation measurement in the radio-sensitive optical fibre (3) with respect to the reference optical arm (4),

**characterized in that**

- the light beam (10) is non-polarized or depolarized or
- the light beam (10) is polarized and the radio-sensitive optical fibre (3) is a polarization-maintaining fibre,

and **in that** the dosimeter comprises an other radio-sensitive optical fibre and a beam splitter arranged between the light source (1), the radio-sensitive optical fibre (3) and the other radio-sensitive optical fibre, the beam splitter being capable of splitting the light beam (10) between the radio-sensitive optical fibre (3) and the other radio-sensitive optical fibre, an other photodetector arranged to record an other power measurement of the light beam transmitted through the other radio-sensitive optical fibre, the electronic system (20) being adapted to receive the other power measurement of the other photodetector, the electronic system (20) being configured to extract an other differential radiation induced attenuation measurement in the other radio-sensitive optical fibre with respect to the reference optical arm.

**2.** The dosimeter (100) according to claim 1, wherein the light source (1) comprises an amplified spontaneous emission source generating the light beam by amplified stimulated emission, the light beam (10) being non-polarized.

**3.** The dosimeter (100) according to claim 1, comprising an active or passive optical device arranged downstream of the light source (1) and configured to depolarize the light beam (10).

**4.** The dosimeter (100) according to claim 3, wherein the passive optical device comprises a Lyot depolarizer or a polarization combiner and two polarization-maintaining optical fibres of different lengths.

**5.** The dosimeter (100) according to claim 3, wherein the active optical device comprises an optical phase modulator.

**6.** The dosimeter (100) according to one of claims 3 to 5, wherein the light source (1) comprises a laser diode or a superluminescent diode.

**7.** The dosimeter (100) according to any one of claims 1 to 6, wherein the radio-sensitive optical fibre (3) is a single-mode or multi-mode fibre.

**8.** The dosimeter (100) according to any one of claims 1 to 7, wherein the reference optical arm (4) comprises an optical fibre section.

**9.** The dosimeter (100) according to any one of claims 1 to 8, wherein the electronic system (20) comprises a logarithmic amplifier (7) configured to receive simultaneously the power measurement (21) of the first photodetector (5) and the reference power measurement (22) of the second photodetector (6), the logarithmic amplifier (7) being capable of extracting the differential radiation induced attenuation measurement (27) in the radio-sensitive optical fibre.

**10.** The dosimeter (100) according to any one of claims 1 to 9, wherein the light source (1) is capable of emitting the light beam (10) at a first wavelength and at a second wavelength distinct from the first wavelength, the first photodetector (5) being adapted to record a power measurement (21) of the light beam transmitted through the radio-sensitive optical fibre (3) at the first wavelength and at the second wavelength, the second photodetector (6) being adapted to record the reference power measurement (21) at the first wavelength and at the second wavelength, and in that the electronic system (20) is capable of extracting the differential radiation induced attenuation measurement at the first wavelength and at the second wavelength.

**11.** The dosimeter (100) according to any one of claims 1 to 10, comprising at least one temperature sensor (13, 14, 15) arranged to acquire at least one temperature measurement (23, 24, 25) at at least one point of the dosimeter, and in that the electronic system (20) is adapted to correct the differential radiation induced attenuation measurement as a function of said at least one temperature measurement (23, 24, 25).

**12.** A dosimetry method comprising the following steps:

- emitting a light beam (10),
- splitting the light beam (10) into a first part of the light beam (11) and a second part of the light beam (12),
- injecting the first part of the light beam (11) into a radio-sensitive optical fibre (3) and into an other radio-sensitive optical fibre, the light beam (10) being depolarized or, respectively, the light beam (10) being polarized and the radio-sensitive optical fibre (3) being a polarization-maintaining fibre;
- injecting the second part of the light beam (12) into a reference optical arm (4) of smaller optical length than that of the radio-sensitive optical fibre (3),
- recording on a first photodetector (5) a power measurement (21) of the light beam transmitted through the radio-sensitive optical fibre (3);
- recording on an other photodetector an other power measurement of the light beam transmitted through the other radio-sensitive optical fibre
- recording on a second photodetector (6) a reference power measurement (22) of the light beam transmitted through the reference optical arm (4);
- electronically processing the power measurement (21) of the first photodetector (5) and the reference power measurement (22) of the second photodetector (6) to extract therefrom a differential radiation induced attenuation measurement in the radio-sensitive optical fibre (3) with respect to the reference optical arm (4)
- electronically processing the other power measurement of the other photodetector and the reference power measurement (22) of the second photodetector (6) to extract therefrom an other differential radiation induced attenuation measurement in the other radio-sensitive optical fibre with respect to the reference optical arm (4).

[Fig. 1]

100
10
12
4
1
2
6
13
14
11
3
11
16
5
25
23
24
15
28
21
26
8
7
20
22
30
27

[Fig. 2]

100
10
12
11
4
1
2
6
3
13
14
11
21
11
9
24
5
15
23
11
11
26
16
25
22
28
8
7
23
20
30
27

[Fig. 3]

1
40
41
42
43
45
47
48
10
44
46

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CN 111505695 B